# FASCICULE DE BREVET EUROPEEN

(11) **EP 0 617 226 B1**
(45) Date de publication et mention de la délivrance du brevet: **18.12.1996**
(21) Numéro de dépôt: 94400515.6
(22) Date de dépôt: 09.03.1994
(51) Int. Cl.: F17C 5/00, H02K 5/136

(54) **Carrousel pour le remplissage de bouteilles de gaz, comportant des moyens de production de courant électrique**
Füllkarusell für Gasflaschen mit Erzeugungsmittel für die Herstellung von elektrischem Strom
Filling carousel for gas bottles having means for producing electrical current

(30) Priorité: 23.03.1993 FR 9303392
(43) Date de publication de la demande: 28.09.1994
(73) Titulaire: SIRAGA S.A.(société anonyme), F-36500 Buzancais (FR)
(72) Inventeur: Rufflet, Jacques, F-36130 Deols (FR)
(74) Mandataire: Lemoine, Robert

(56) Documents cités:
- EP-A- 0 291 295
- WO-A-82/03260
- GB-A- 2 230 392
- PATENT ABSTRACTS OF JAPAN vol. 14, no. 119 (M-945) (4062) 6 Mars 1990 & JP-A-01 316 599 (KUBOTA LTD) 21 Décembre 1989
- PATENT ABSTRACTS OF JAPAN vol. 14, no. 119 (M-945) (4062) 6 Mars 1990 & JP-A-01 316 599

## Description

La présente invention concerne un carrousel pour le remplissage de bouteilles de gaz, du type comprenant un plateau portant une succession de bascules uniformément réparties le long de sa périphérie et destinées à supporter les bouteilles, des moyens pour faire tourner le plateau afin de transférer les bouteilles d'un poste de chargement à un poste de déchargement, des automates associés aux bascules pour introduire des quantités de gaz contrôlées dans les bouteilles pendant leur transfert du poste de chargement au poste de déchargement, et un joint tournant disposé au centre du plateau pour permettre l'alimentation des automates en gaz et en air comprimé, voir JP-A-01 316 599.

A l'heure actuelle, les automates associés aux bascules des carrousels de ce type sont également alimentés en électricité à partir d'une source de courant extérieure par l'intermédiaire du joint tournant. Celui-ci, qui est conçu pour éviter que des étincelles puissent se former ou se propager dans son voisinage et risquent de provoquer des explosions, a cependant l'inconvénient d'être complexe et d'entraîner des coûts de fabrication et d'installation particulièrement élevés.

La présente invention se propose de remédier à cet inconvénient et, pour ce faire, elle a pour objet un carrousel du type précité, qui se caractérise en ce que le plateau supporte un moteur pneumatique alimenté en air comprimé à partir du joint tournant, une génératrice de courant électrique destinée à être entraînée par le moteur pneumatique, et un circuit électrique à sécurité intrinsèque relié à la génératrice et destiné à alimenter les automates en courant électrique.

La présente invention préconise donc d'embarquer sur le plateau les moyens de produit du courant électrique nécessaire au fonctionnement des automates. Cette solution, qui revient à utiliser l'air comprimé comme seule source d'énergie extérieure, permet de simplifier grandement la structure du joint tournant et par conséquent de faciliter sa fabrication et son installation.

Selon un mode de réalisation préféré de l'invention, le circuit électrique est disposé dans un coffret anti-déflagration et comprend un régulateur de tension dont l'entrée est reliée à la sortie de la génératrice, une batterie dont les bornes sont reliées à la sortie du régulateur de tension, un convertisseur dont l'entrée est reliée aux bornes de la batterie, et des barrières à sécurité intrinsèque dont les entrées sont reliées à la sortie du convertisseur et dont les sorties sont respectivement reliées aux automates.

Pour éviter tout risque d'explosion, il est indispensable que la génératrice soit antidéflagrante ou qu'elle soit logée dans le coffret antidéflagrant, lequel peut être pressurisé avec de l'air comprimé ou avec un gaz inerte.

D'autres caractéristiques et avantages de la présente invention ressortiront de la description d'un mode de réalisation particulier, qui sera donnée ci-après à titre d'exemple nullement limitatif en référence aux dessins annexés dans lesquels :
- la figure 1 est une vue de dessous schématique d'un carrousel conçu pour permettre le remplissage des bouteilles de gaz, le plateau de ce carrousel portant des moyens pour produire le courant électrique et alimenter les automates associés aux bascules ; et
- la figure 2 est un schéma représentant à échelle agrandie les moyens prévus pour produire le courant électrique et alimenter les automates.

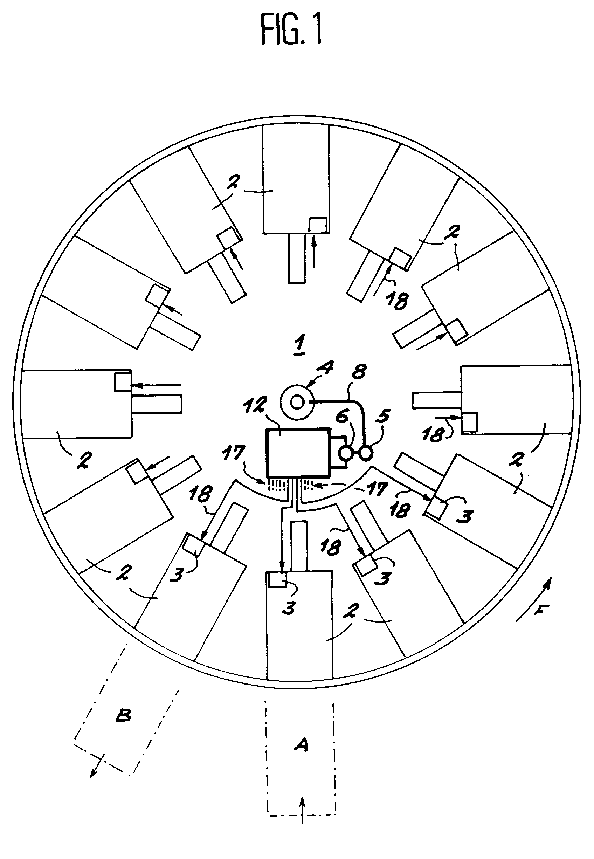

Le carrousel que l'on peut voir sur la figure 1 a été mis au point pour assurer le remplissage de bouteilles de gaz sous pression, notamment de bouteilles de butane ou de propane.

Il comprend tout d'abord un plateau 1 portant une succession de bascules 2 uniformément réparties le long de sa périphérie, et des moyens d'entraînement (non représentés) pour faire tourner le plateau dans sens de la flèche F.

Pendant la rotation du plateau 1, les bascules 2 parviennent les unes après les autres devant un poste de chargement A au niveau duquel une bouteille vide est déposée sur chacune d'elles, puis devant un poste de déchargement B au niveau duquel les bouteilles pleines sont enlevées des bascules.

Le carrousel comprend également des automates 3 associés aux bascules 2 et destinés à introduire des quantités de gaz contrôlées dans les bouteilles pendant leur transfert du poste de chargement A au poste de déchargement B, ainsi qu'un joint tournant 4 situé au centre du plateau 1 et conçu pour amener le gaz sous pression jusqu'aux automates et fournir à ces derniers l'air comprimé nécessaire à leur fonctionnement.

Conformément à l'invention, le plateau 1 supporte un moteur pneumatique 5 alimenté en air comprimé à partir du joint tournant 4, une génératrice de courant électrique 6 destinée à être entraînée par le moteur pneumatique 5, et un circuit électrique à sécurité intrinsèque 7 destiné à être alimenté par la génératrice et à fournir aux automates 3 le courant électrique qui leur est nécessaire pour pouvoir fonctionner.

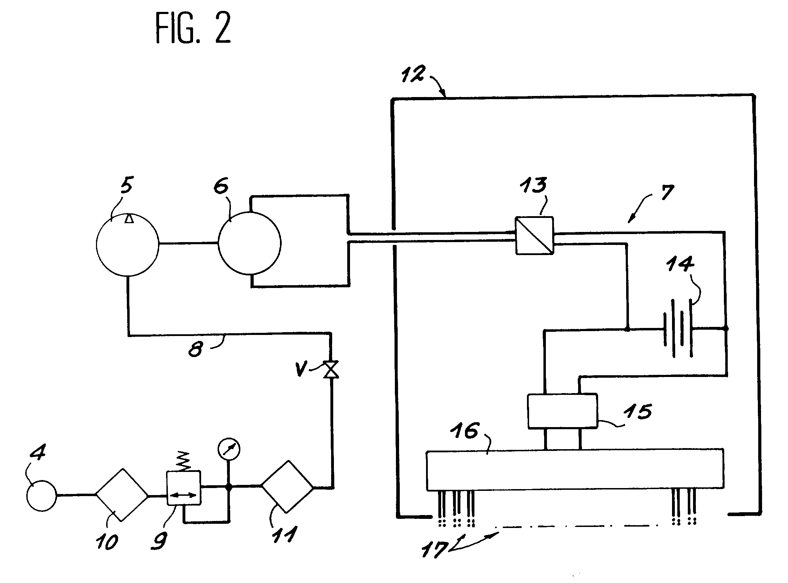

En se référant maintenant à la figure 2, on remarquera que le moteur pneumatique 5 est alimenté en air comprimé par l'intermédiaire d'une conduite 8 le reliant au joint tournant 4 et dans laquelle sont insérés d'une manière connue en soi une vanne V ainsi qu'un détendeur 9, un filtre à eau 10 et un filtre à huile 11, ces filtres étant situés respectivement en amont et en aval du détendeur 9, en considérant le sens de circulation de l'air comprimé dans la conduite 8.

On remarquera également que le circuit électrique 7 est disposé dans un coffret antidéflagrant 12 pressurisé avec de l'air comprimé ou un gaz inerte, et comprend un régulateur de tension 13 dont l'entrée est reliée à la sortie de la génératrice 6, une batterie 14 dont les bornes sont reliées à la sortie du régulateur de tension 13, un convertisseur 15 dont l'entrée est reliée aux bornes de la batterie 14, et des barrières à sécurité intrinsèque 16 dont les entrées sont reliées à la sortie du convertisseur et dont les sorties 17 sont respectivement reliées aux automates 3 par l'intermédiaire de câbles électriques 18 (visibles uniquement sur la figure 1).

Dans le mode de réalisation représenté sur la figure 2, la génératrice est située à l'extérieur du coffret antidéflagrant 12. Comme son environnement est explosible, elle doit nécessairement être antidéflagrante.

Au cas où elle ne le serait pas, il conviendrait bien entendu de l'installer dans un coffret antidéflagrant spécial ou dans celui qui renferme le circuit électrique 7.

A titre d'exemple, on précisera ici que la génératrice 6 est conçue pour produit un courant continu de 24 volts et de 4 à 8 ampères et que la batterie 14, qui est de préférence du type nickel/cadmium, est protégée par le régulateur de tension 13 contre les éventuelles surcharges pouvant survenir pendant son chargement et est apte à délivrer un courant continu de 24 volts et de 4 à 8 ampères.

On précisera également que le convertisseur 15 est destiné à adapter la tension du courant de la batterie 14 ou de la génératrice 6 à une valeur acceptable par les barrières à sécurité intrinsèque qui, dans le mode de réalisation envisagé ici, sont destinées à délivrer un courant de l'ordre de 5 volts et de 100 mA.

Bien entendu, les valeurs de la tension et de l'intensité du courant produit par la génératrice 6, et des courants délivrés par la batterie 14 et les barrières à sécurité intrinsèques 16 pourraient être différentes de celles qui ont été indiquées ci-dessus. Par exemple, la génératrice 6 et la batterie 14 pourraient être choisies pour que les barrières 16 fournissent aux automates un courant continu ayant une tension de l'ordre de ± 5 à ± 10 V et une intensité de 100 mA.

Il ressort de ce qui précède que la présente invention, en préconisant d'embarquer sur le plateau 1 du carrousel les moyens de production de l'électricité nécessaire à l'alimentation en courant électrique des automates 3, permet d'utiliser un joint tournant 4 beaucoup plus simple que celui des carrousels actuels qui est conçu pour amener le courant électrique en même temps que l'air comprimé et le gaz sous pression.

## Revendications

1. Carrousel pour le remplissage de bouteilles de gaz, du type comprenant un plateau (1) portant une succession de bascules (2) uniformément réparties le long de sa périphérie et destinées à supporter les bouteilles, des moyens pour faire tourner le plateau afin de transférer les bouteilles d'un poste de chargement (A) à un poste de déchargement (B), des automates (3) associés aux bascules pour introduire des quantités de gaz contrôlées dans les bouteilles pendant leur transfert du poste de chargement au poste de déchargement, et un joint tournant (4) disposé au centre du plateau pour permettre l'alimentation des automates en gaz et en air comprimé, caractérisé en ce que le plateau (1) supporte un moteur pneumatique (5) alimenté en air comprimé à partir du joint tournant (4), une génératrice de courant électrique (6) destinée à être entraînée par le moteur pneumatique (5), et un circuit électrique à sécurité intrinsèque (7) relié à la génératrice (6) et destiné à alimenter les automates (3) en courant électrique.

2. Carrousel selon la revendication 1, caractérisé en ce que le circuit électrique (7) est disposé dans un coffret anti-déflagration (12) et comprend un régulateur de tension (13) dont l'entrée est reliée à la sortie de la génératrice (6), une batterie (14) dont les bornes sont reliées à la sortie du régulateur de tension (13), un convertisseur (15) dont l'entrée est reliée aux bornes de la batterie (14), et des barrières à sécurité intrinsèque (16) dont les entrées sont reliées à la sortie du convertisseur (15) et dont les sorties (17) sont respectivement reliées aux automates (3).

3. Carrousel selon la revendication 2, caractérisé en ce que la génératrice (6) est antidéflagrante.

4. Carrousel selon la revendication 2, caractérisé en ce que la génératrice (6) est logée dans le coffret antidéflagrant (12).

5. Carrousel selon l'une quelconque des revendications 2 à 4, caractérisé en ce que la génératrice (6) est conçue pour produire un courant électrique continu de 24V et de 4 à 8A.

6. Carrousel selon l'une quelconque des revendications 2 à 5, caractérisé en ce que la batterie (14) est apte à délivrer un courant continu de 24V et de 4 à 8A.

7. Carrousel selon l'une quelconque des revendications 2 à 6, caractérisé en ce que les barrières à sécurité intrinsèque (16) sont aptes à délivrer un courant électrique de l'ordre de ± 5 à ± 10V et de l'ordre de 100 mA.

## Patentansprüche

1. Karussell für die Füllung von Gasflaschen des Typs, der aus einem Tisch (1) besteht, der eine Aufeinanderfolge von Aufnahmen (2) trägt, die entlang seines Umfangs gleichmäßig beabstandet und zum Tragen der Flaschen bestimmt sind, Mitteln zur Drehung des Tisches, um die Flaschen von einem Ladeplatz (A) zu einem Entladeplatz (B) zu transferieren, Automaten (3), die mit den Aufnahmen verbunden sind, um gesteuerte Gasmengen in die Flaschen während ihres Transfers von dem Ladeplatz zu dem Entladeplatz einzuführen, und einer Drehkupplung (4), die in der Mitte des Tisches angeordnet ist, um die Versorgung der Automaten mit Gas und Druckluft zu erlauben, dadurch gekennzeichnet, daß der Tisch (1) einen Pneumatikmotor (5) trägt, der mit Druckluft aus der Drehkupplung (4) versorgt wird, einen elektrischen Stromerzeuger (6), der für einen Antrieb durch den Pneumatikmotor (5) bestimmt ist, und einen eigensicheren elektrischen Stromkreis (7), der mit dem Stromerzeuger (6) verbunden und für eine Versorgung der Automaten (3) mit elektrischem Strom bestimmt ist.

2. Karussell nach Anspruch 1, dadurch gekennzeichnet, daß der elektrische Stromkreis (7) in einem explosionsgeschützten Gehäuse (12) angeordnet ist und aus einem Spannungsregler (13) besteht, dessen Eingang mit dem Ausgang des Stromerzeugers (6) verbunden ist, einer Batterie (14), deren Anschlußklemmen mit dem Ausgang des Spannungsreglers (13) verbunden sind, einem Wandler (15), dessen Eingang mit den Anschlußklemmen der Batterie (14) verbunden ist, und eigensicheren Steuertoren (16), deren Eingänge mit dem Ausgang des Wandlers (15) und deren Ausgänge (17) mit den Automaten (3) verbunden sind.

3. Karussell nach Anspruch 2, dadurch gekennzeichnet, daß der Stromerzeuger (6) explosionsgeschützt ist.

4. Karussell nach Anspruch 2, dadurch gekennzeichnet, daß der Stromerzeuger (6) in dem explosionsgeschützten Gehäuse (12) angeordnet ist.

5. Karussell nach einem der Ansprüche 2 bis 4, dadurch gekennzeichnet, daß der Stromerzeuger (6) zur Erzeugung eines elektrischen Gleichstromes von 24V und 4 bis 8A entworfen ist.

6. Karussell nach einem der Ansprüche 2 bis 5, dadurch gekennzeichnet, daß die Batterie (14) zur Lieferung eines Gleichstromes von 24V und von 4 bis 8A angepaßt ist.

7. Karussell nach einem der Ansprüche 2 bis 6, dadurch gekennzeichnet, daß die eigensicheren Steuertore (16) zur Lieferung eines elektrischen Stromes in der Größenordnung von ± 5 bis ± 10V und in der Größenordnung von 100 mA angepaßt sind.

## Claims

1. A carousel for filling gas bottles, of the type comprising a supporting plate (1) provided with a number of tilting devices (2) uniformly spaced along its periphery and intended to support the bottles, with means enabling the plate to turn in order to transfer the bottles from a loading station (A) to an unloading station (B), with automatic devices (3) associated with the tilting devices for introducing controlled quantities of gas into the bottles during their journey from the loading station to the unloading station, and with a rotatable joint (4) placed in the centre of the plate to enable the supply of gas and compressed air to the automatic devices, characterised in that the plate (1) supports a pneumatic motor (5) fed with compressed air originating from the rotatable joint(4), an electric current generator (6) intended to be driven by the pneumatic motor (5) and a total security electrical circuit (7) connected to the generator (6) and intended to feed the automatic devices (3) with electric current.

2. A carousel according to Claim 1, characterised in that the electrical circuit (7) is disposed in an explosion proof enclosure (12) and comprises a voltage regulator (13) whose input is connected to the the generator output (6), a battery (14) whose end terminals are connected to the output of the voltage regulator (13), a converter (15) whose input is connected to the end terminals of the battery (14) and total security barriers (16) whose inputs are connected to the output of the converter (15) and whose outputs (17) are respectively connected to the automatic devices (3).

3. A carousel according to Claim 2, characterised in that the generator (6) is explosion prooof.

4. A carousel according to Claim 2, characterised in that the generator (6) is located inside an explosion proof enclosure (12).

5. A carousel according to any one of claims 2 to 4, characterised in that the generator (6) is conceived to produce a continuous 24V electric current, at 4 to 8 A.

6. A carousel according to any one of claims 2 to 5, characterised in that the battery (14) is capable of delivering a continuous 24V current, at 4 to 8A.

7. A carousel according to any one of claims 2 to 6, characterised in that the total security barriers (16) are capable of delivering an electric current of the order of ± 5 to ± 10V and at 100 mA.
